(19) Europäisches Patentamt
European Patent Office
Office européen des brevets

(11) **EP 1 921 429 A1**

(12) **EUROPÄISCHE PATENTANMELDUNG**

(43) Veröffentlichungstag:
**14.05.2008 Patentblatt 2008/20**

(51) Int Cl.:
*G01J 1/42* *(2006.01)* *G01S 3/78* *(2006.01)*

(21) Anmeldenummer: **07019676.1**

(22) Anmeldetag: **09.10.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **10.11.2006 DE 102006053022**

(71) Anmelder: **Hella KGaA Hueck & Co.**
**59552 Lippstadt (DE)**

(72) Erfinder:
• **Niemann, Thomas**
**27753 Delmenhorst (DE)**
• **Heilenkötter, Carsten**
**28844 Weyhe (DE)**

(74) Vertreter: **Siekmann, Gunnar et al**
**Jabbusch Arendt & Siekmann**
**Koppelstrasse 3**
**26135 Oldenburg (DE)**

(54) **Verfahren und Vorrichtung zur Steuerung einer Klimaanlage**

(57) Bei einem Verfahren zur Steuerung einer Klimaanlage bei dem die einfallende Sonnenstrahlung mit mindestens drei räumlich angeordneten Sensoren erfaßt wird, wird die Berechnung der einfallenden Sonnenstrahlung auf der Basis einer Vektordarstellung der einfallenden Sonnenstrahlung durchgeführt. Auf diese Weise läßt sich ein besonders einfaches Berechnungsverfahren durchführen, das eine besonders geringe Rechenleistung erfordert.

Fig. 1

EP 1 921 429 A1

**Beschreibung**

Die Erfindung betrifft ein Verfahren zur Steuerung einer Klimaanlage, bei dem die einfallende Sonneneinstrahlung mit mindestens drei räumlich angeordneten Sensoren erfaßt wird. Weiterhin betrifft die Erfindung eine entsprechende Vorrichtung. Das Verfahren und die Vorrichtung zur Steuerung der Klimaanlage sind insbesondere für den Einsatz in Kraftfahrzeugen vorgesehen.

In den Druckschriften DE 102 34 585 B4 und DE 103 12 311 A1 sind Vorrichtungen zum Erfassen des Sonnenstandes mit drei räumlich angeordneten Sensoren beschrieben. Unter der räumlichen Anordnung der Sensoren versteht man insbesondere eine unterschiedliche Ausrichtung der Flächennormalen der verschiedenen Sensoren, so daß diese in verschiedene Raumrichtungen ausgerichtet sind und sich über die Ausrichtung der Sensoren ein dreidimensionaler Raum erfassen läßt. In der DE 103 12 311 A1 wird ein Verfahren zur Berechnung des Sonnenstandes und der Bestrahlungsstärke beschrieben. Dabei wird der Winkel des Sonnenstandes zu den Sensoren berücksichtigt, um eine genaue Aussage über den Sonnenstand machen zu können. Die dazu notwendige Berechnung trigonometrischer Funktionen ist mit Mikrokontrollern, die in entsprechende Steuerungseinrichtungen und Sensoren integriert werden können, möglich.

Der Erfindung liegt die Aufgabe zugrunde, ein Verfahren und eine Vorrichtung der eingangs genannten Art zu schaffen, die besonders preisgünstig und einfach durchführbar und herstellbar sind.

Die Lösung dieser Aufgabe erfolgt mit einem Verfahren mit den Merkmalen des Patentanspruchs 1. Vorrichtungsmäßig erfolgt die Lösung der Aufgabe mit einer Vorrichtung mit den Merkmalen des Patentanspruchs 7. Vorteilhafte Ausgestaltungen der Erfindung sind in den Unteransprüchen beschrieben.

Bei einem Verfahren zur Steuerung einer Klimaanlage, insbesondere für eine Klimaanlage in einem Kraftfahrzeug, bei dem die einfallende Sonnenstrahlung mit mindestens drei räumlich angeordneten Sensoren erfaßt wird, ist erfindungswesentlich vorgesehen, daß die Berechnung der einfallenden Sonnenstrahlung auf der Basis einer Vektordarstellung der einfallenden Sonnenstrahlung durchgeführt wird. Auf diese Weise ist eine besonders einfache und rechenarme Operation möglich und die einfallende Sonnenstrahlung läßt sich besonders einfach und mit einem besonders kleinen und preisgünstigen Mikroprozessor berechnen.

Das Verfahren wird dabei bevorzugt unter Ausschluß der Verwendung trigonometrischer Funktionen durchgeführt. Derartige trigonometrische Funktionen also die Berechnung von Sinus, Kosinus und Tangens, erfordern besonders hohe Rechenleistungen und damit den Einsatz vergleichsweise teurer Mikrokontroller. Bevorzugt wird der Sonnenstand durch die Richtung eines Vektors und die Bestrahlungsstärke der Sonne durch den Betrag des Vektors dargestellt und auf dieser Vektorbasis die einfallende Sonnenstrahlung berechnet. Durch die rein vektorielle Darstellung läßt sich die Berechnung vergleichsweise einfach durchführen. Bevorzugt wird der von einem Sensor gemessene Strom als Skalarprodukt des Normalenvektors des Sensors und dem Vektor, der Sonnenstand und Bestrahlungsstärke der Sonne beschreibt, berechnet. Dabei ist vorrausgesetzt, daß die Sensoren eine lambert'sche Empfangscharakteristik haben. Das bedeutet, daß der erzeugte Strom abhängig vom Winkel zwischen dem Vektor zur Lichtquelle und dem Oberflächennormalenvektor ist. Ein flacher Lichteinfall resultiert in einer kleineren Lichtmenge pro Flächeneinheit und damit auch in einem kleineren durch den Sensor erzeugten Strom.

In einer besonders bevorzugten Ausgestaltung der Erfindung erfolgt die Auswertung der von dem mindestens drei Sensoren gemessenen Ströme in einer vorformulierten Gleichung.

In einer bevorzugten Weiterbildung der Erfindung werden relevante Flächen im Fahrzeuginneren der jeweiligen Fläche proportionale Normalenvektoren zugeordnet und aus dem Skalarprodukt der jeweiligen Flächennormalen und der vektoriellen Darstellung der Sonne Leistungsanteile, die zur Erwärmung der Flächen beitragen, berechnet. Auf dieser Basis kann dann für die Fahrzeugklimatisierung abgeschätzt werden, in welchem Umfang sich das Fahrzeug bzw. seine Passagiere erwärmen werden und im Gegenzug kann die Lufttemperatur abgesenkt und/oder die Luftgeschwindigkeit der Klimaanlage angehoben werden.

Die Vorrichtung zur Steuerung einer Klimaanlage mit mindestens drei räumlich angeordneten Sensoren zur Durchführung des obengenannten Verfahrens zeichnet sich dadurch aus, daß die Vorrichtung eine Recheneinheit zur Berechnung der einfallenden Sonnenstrahlung auf der Basis einer vektoriellen Darstellung der einfallenden Sonnenstrahlung aufweist. Auf diese Weise kann eine besonders preisgünstige Vorrichtung hergestellt werden, da die Recheneinheit mit einem vergleichsweise kleinen und preisgünstigen Mikrokontroller ausgestattet ist.

Die in dieser Vorrichtung verwendeten Sensoren sind bevorzugt Sensoren mit einer lambert'schen Empfangscharakteristik, die unter verschiedenen Raumwinkeln ausgerichtet sind und auf diese Weise einen dreidimensionalen Raum erfassen. Die Recheneinheit weist bevorzugt Speichereinheiten auf, in denen die vorher berechneten Koeffizienten für die Multiplikation mit den Meßwerten der einzelnen Sensorelemente gespeichert sind.

Ein weiterer Aspekt der Erfindung betrifft eine Klimaanlage mit einer erfindungsgemäßen Vorrichtung zur Steuerung der Klimaanlage. Weiterhin wird Schutz beansprucht für ein Kraftfahrzeug mit einer Klimaanlage mit einer derartigen erfindungsgemäßen Vorrichtung, die mit dem erfindungsgemäßen Verfahren arbeitet.

Nachfolgend wird die Erfindung anhand eines in der Zeichnung dargestellten Ausführungsbeispiels weiter erläutert. Im einzelnen schematischen
Darstellungen in:

Fig. 1: eine Draufsicht auf drei Sensoren einer erfindungsgemäßen Vorrichtung;

Fig. 2: eine Seitenansicht von Fig. 1;

Fig. 3: eine zweite Seitenansicht von Fig. 1;

Fig. 4: eine vektorielle Darstellung der einfallenden Sonnenstrahlung;

Fig. 5: eine vektorielle Darstellung der Fläche des Normalenvektors eines Sensorelements und

Fig. 6: eine Prinzipsskizze der Schaltung der erfindungsgemäßen Vorrichtung.

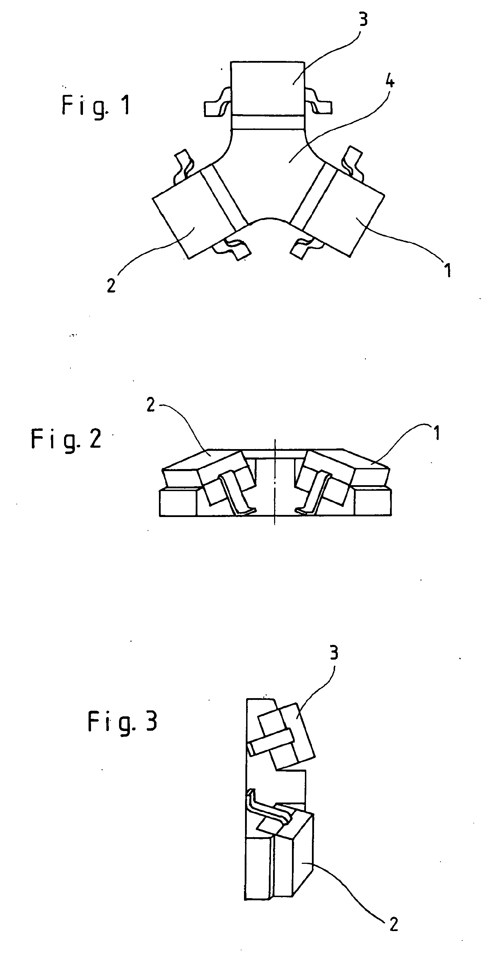

In Fig. 1 ist eine Draufsicht auf die drei räumlich angeordneten Sensoren 1, 2, 3 der erfindungsgemäßen Vorrichtung dargestellt. In dem dargestellten Aufbau sind die Sensoren 1, 2, 3 auf einen gemeinsamen Körper 4, insbesondere einen MID-Körper, montiert. Dieser ist insgesamt dreieckförmig ausgebildet und auf den Enden dieses Dreiecks sind die drei Sensoren 1, 2, 3 montiert. Jeder der drei Sensoren weist zwei Anschlüsse auf.

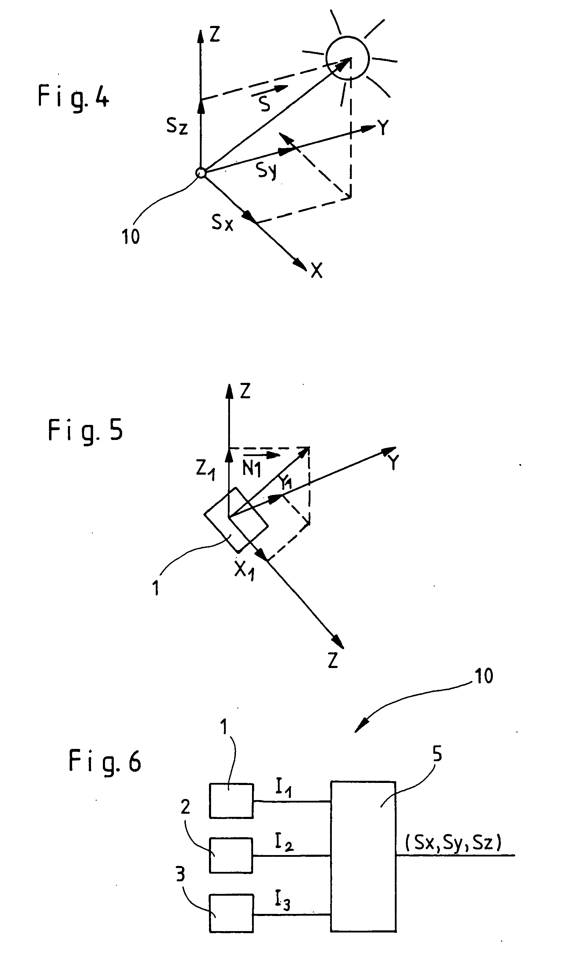

In den Fig. 2 und 3 sind verschiedene Seitenansichten des Sensoraufbaus 4 dargestellt, wobei in Fig. 2 seitlich die Sensoren 1 und 2 und in Fig. 3 seitlich die Sensoren 2 und 3 zu erkennen sind. Dabei ist jeweils zu erkennen, wie die Sensoren gegeneinander verkippt sind und dadurch die Oberflächennormen der Sensoren in verschiedene Raumrichtungen ausgerichtet sind und einen dreidimensionalen Raum aufspannen.

In Fig. 4 ist ausgehend von der erfindungsgemäßen Vorrichtung 10 ein Vektor "S" aufgezeichnet. Dieser Vektor "S" beschreibt durch seine Richtung den Sonnenstand und durch seinen Betrag die Bestrahlungsstärke. In einem kartesischen Koordinatensystem mit den Koordinaten "X", "Y" und "Z" läßt sich der Vektor "S" in orthogonale Vektoren $S_x$, $S_y$, $S_z$ zerlegen.

In Fig. 5 ist ein Sensor 1 dargestellt, der einen senkrecht auf der Oberfläche stehenden zugeordneten Normalenvektor $N_1$ aufweist bzw. dem Sensor zugeordnet ist. Dieser Normalenvektor läßt sich in dem zugrundeliegenden kartesischen Koordinatensystem "X", "Y" und "Z" in die Komponenten $X_1$, $Y_1$ und $Z_1$ zerlegen. Aus der räumlich bekannten Lage der einzelnen Sensorflächen im Bezug auf das gewählte Koordinatensystem (z.B. der erfindungsgemäßen Vorrichtung oder des zu klimatisierenden Fahrzeugs), können dann die einzelnen Komponenten der vektoriellen Darstellung der Sonne berechnet werden:

$$S_x = \frac{(y_3 z_2 - y_2 z_3)I_1 + (y_1 z_3 - y_3 z_1)I_2 + (z_1 y_2 - y_1 z_2)I_3}{x_1(y_3 z_2 - y_2 z_3) + y_1(x_2 z_3 - x_3 z_2) + z_1(x_3 y_2 - x_2 y_3)}$$

$$S_y = \frac{(x_3 z_2 - x_2 z_3)I_1 + (x_1 z_3 - x_3 z_1)I_2 + (x_2 z_1 - x_1 z_2)I_3}{x_1(y_3 z_2 - y_2 z_3) + y_1(x_2 z_3 - x_3 z_2) + z_1(x_3 y_2 - x_2 y_3)}$$

$$S_z = \frac{(x_3 y_2 - x_2 y_3)I_1 + (x_1 y_3 - x_3 y_1)I_2 + (x_2 y_1 - x_1 y_2)I_3}{x_1(y_3 z_2 - y_2 z_3) + y_1(x_2 z_3 - x_3 z_2) + z_1(x_3 y_2 - x_2 y_3)}$$

Dabei sind $S_x$, $S_y$, $S_z$ die Komponenten der vektoriellen Darstellung der Sonne, so wie sie in Fig. 4 dargestellt sind. $X_{1-3}$, $Y_{1-3}$, $Z_{1-3}$ sind die Komponenten der Normalenvektoren der Sensorelemente, so wie sie in Fig. 5 dargestellt sind. $I_1$, $I_2$, $I_3$ sind die von den jeweiligen Sensoren gemessenen Meßwerte, die bei lambert'scher Empfangscharakteristik der Sensoren proportional zur Bestrahlungsstärke sind. Um den Mikrokontroller zur Laufzeit weiter zu entlasten, können die Koeffizienten für die Multiplikation mit den Meßwerten der einzelnen Sensorelemente schon vorher berechnet werden, so daß sich die Rechnung wie folgt vereinfacht:

$$S_x = s_{x1}I_1 + s_{x2}I_2 + s_{x3}I_3$$

$$S_y = s_{y1}I_1 + s_{y2}I_2 + s_{y3}I_3$$

$$S_z = s_{z1}I_1 + s_{z2}I_2 + s_{z3}I_3$$

In Fig. 6 ist die erfindungsgemäße Vorrichtung 10 schematisch dargestellt. Die drei Sensoren 1, 2, 3 liefern Meßwerte $I_1$, $I_2$, $I_3$ an eine Recheneinheit 5, in der mit vergleichsweise wenig Rechenaufwand die Komponenten $S_x$, $S_y$, $S_z$ der vektoriellen Darstellung der Sonnenstrahlung berechnet werden.

Damit läßt sich die Wirkung der Sonne auf eine Oberfläche weiter berechnen. Die Oberfläche des Körpers wird dazu in Einzelflächen zerlegt, denen ein der jeweiligen Fläche proportionaler Normalenvektoren zugeordnet werden kann. Das Skalarprodukt aus den jeweiligen Flächennormalen und der vektoriellen Darstellung der Sonne ergeben die Leistungsanteile, die zur Erwärmung des Körpers beitragen. Damit kann dann z.B. für eine Fahrzeugklimatisierung abgeschätzt werden, in welchem Umfang sich das Fahrzeug bzw. seine Passagiere erwärmen. Entsprechend kann dann die Klimaanlage geregelt werden und die Lufttemperatur oder die Luftgeschwindigkeit angepaßt werden.

**Patentansprüche**

1. Verfahren zur Steuerung einer Klimaanlage, bei dem die einfallende Sonnenstrahlung mit mindestens drei räumlich angeordneten Sensoren erfaßt wird,
   **dadurch gekennzeichnet,**
   **daß** die Berechnung der einfallenden Sonnenstrahlung auf der Basis einer Vektordarstellung der einfallenden Sonnenstrahlung durchgeführt wird.

2. Verfahren nach Anspruch 1, **dadurch gekennzeichnet, daß** die Berechnung unter Ausschluß von trigonometrischen Funktionen durchgeführt wird.

3. Verfahren nach einem der Ansprüche 1 oder 2, **dadurch gekennzeichnet, daß** der Sonnenstand durch die Richtung des Vektors und die Bestrahlungsstärke der Sonne durch den Betrag des Vektors berücksichtigt werden.

4. Verfahren nach einem der vorhergehenden Ansprüche, **dadurch gekennzeichnet, daß** der von einem Sensor gemessene Strom als Skalarprodukt des Normalenvektors des Sensors und dem Vektor, der Sonnenstand und Bestrahlungsstärke der Sonne beschreibt, berechnet wird.

5. Verfahren nach einem der vorhergehenden Ansprüche, **dadurch gekennzeichnet, daß** die Auswertung der von den mindestens drei Sensoren gemessenen Ströme in einer vorformulierten Gleichung erfolgt.

6. Verfahren nach einem der vorhergehenden Ansprüche, **dadurch gekennzeichnet, daß** Flächen eines zu klimatisierenden Bereiches der jeweiligen Fläche proportionale Normalenvektoren zugeordnet werden und daß das Skalarprodukt aus den jeweiligen Flächennormalen und der vektoriellen Darstellung der Sonneneinstrahlung zur Abschätzung der Erwärmung dieser Flächen ermittelt wird.

7. Vorrichtung zur Steuerung einer Klimaanlage mit mindestens drei räumlich angeordneten Sensoren zur Durchführung des Verfahrens nach einem der vorhergehenden Ansprüche,
   **dadurch gekennzeichnet,**
   **daß** die Vorrichtung (10) eine Recheneinheit (5) zur Berechnung der einfallenden Sonnenstrahlung auf der Basis einer Vektordarstellung der Sonnenstrahlung aufweist.

8. Vorrichtung nach Anspruch 7, **dadurch gekennzeichnet, daß** die Recheneinheit Speicherelemente zur Speicherung von vorher berechneten Koeffizienten zur Multiplikation mit den Meßwerten der einzelnen Sensorelemente aufweist.

9. Klimaanlage mit einer Vorrichtung mit den Merkmalen der Patentansprüche 7 oder 8.

10. Kraftfahrzeug mit einer Klimaanlage mit einer Vorrichtung zur Steuerung der Klimaanlage mit den Merkmalen der Ansprüche 7 oder 8.

Fig. 1

Fig. 2

Fig. 3

Fig. 4

Fig. 5

Fig. 6

**Europäisches Patentamt**

**EUROPÄISCHER RECHERCHENBERICHT**

Nummer der Anmeldung

EP 07 01 9676

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 460 448 A (BEHR HELLA THERMOCONTROL GMBH [DE]) 22. September 2004 (2004-09-22) * Absätze [0024] - [0036]; Ansprüche 28,29,32; Abbildungen 1-3 * ----- | 1-10 | INV. G01J1/42 G01S3/78 |
| A | US 5 072 105 A (OSAWA TAKASHI [JP]) 10. Dezember 1991 (1991-12-10) * Spalte 1, Zeilen 7-12; Abbildungen 1,2 * * Spalte 3, Zeile 32 - Spalte 5, Zeile 34 * ----- | 1-10 | |
| A | US 6 669 147 B2 (BERTHEUX PHILIPPE [FR] ET AL) 30. Dezember 2003 (2003-12-30) * Spalte 7, Zeilen 6-21 * ----- | 6 | |

**RECHERCHIERTE SACHGEBIETE (IPC)**

G01J
G01S

Der vorliegende Recherchenbericht wurde für alle Patentansprüche erstellt

| Recherchenort | Abschlußdatum der Recherche | Prüfer |
|---|---|---|
| München | 19. Februar 2008 | Hambach, Dirk |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

# EP 1 921 429 A1

## ANHANG ZUM EUROPÄISCHEN RECHERCHENBERICHT
## ÜBER DIE EUROPÄISCHE PATENTANMELDUNG NR.

EP 07 01 9676

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2008

| Im Recherchenbericht angeführtes Patentdokument | | Datum der Veröffentlichung | Mitglied(er) der Patentfamilie | | Datum der Veröffentlichung |
|---|---|---|---|---|---|
| EP 1460448 | A | 22-09-2004 | AT | 381717 T | 15-01-2008 |
| | | | DE | 10312311 A1 | 21-10-2004 |
| US 5072105 | A | 10-12-1991 | JP | 3052208 U | 21-05-1991 |
| US 6669147 | B2 | 30-12-2003 | AT | 258134 T | 15-02-2004 |
| | | | CA | 2380665 A1 | 05-10-2002 |
| | | | DE | 60200175 D1 | 26-02-2004 |
| | | | DE | 60200175 T2 | 29-07-2004 |
| | | | EP | 1247741 A1 | 09-10-2002 |
| | | | FR | 2823182 A1 | 11-10-2002 |
| | | | JP | 2002308199 A | 23-10-2002 |
| | | | US | 2002145082 A1 | 10-10-2002 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10234585 B4
- DE 10312311 A1